# EUROPÄISCHE PATENTSCHRIFT

(11) **EP 3 579 680 B1**
(45) Veröffentlichungstag und Bekanntmachung des Hinweises auf die Patenterteilung: **06.03.2024**
(21) Anmeldenummer: 18702657.0
(22) Anmeldetag: 30.01.2018
(51) Int. Cl.: A01C 5/06

(54) **SÄSCHAR, INSBESONDERE MEISSELSCHAR**
SOWING COULTER, IN PARTICULAR CHISEL COULTER
SOC DE SEMOIR, EN PARTICULIER SOC À TRANCHANT

(30) Priorität: 13.02.2017 DE 102017102782
(43) Veröffentlichungstag der Anmeldung: 18.12.2019
(73) Patentinhaber: Amazonen-Werke H. Dreyer SE & Co. KG, 49205 Hasbergen (DE)
(72) Erfinder: SCHWAMM, Victor, 49086 Osnabrück (DE); TROEBNER, Michael, 49076 Osnabrück (DE); VOLLMER, Hubert, 49584 Fürstenau (DE)
(86) Internationale Anmeldenummer: PCT/EP2018/052184
(87) Internationale Veröffentlichungsnummer: WO 2018/145939

(56) Entgegenhaltungen:
- DE-A1- 10 327 377
- DE-A1-102006 026 808
- US-A- 2 080 741
- US-A- 5 103 918
- US-A- 5 605 196
- US-A- 5 865 131

## Beschreibung

Die Erfindung betrifft ein Säschar, insbesondere Meißelschar gemäß des Oberbegriffes Anspruches 1.

Ein derartiges Säschar, insbesondere Meißelschar ist durch die DE 43 39 442 A1 bekannt. Bei diesem Säschar sind sowohl der Aufreissmeißel wie auch die Scharflügel unverstellbar gegenüber dem Scharkörper angeordnet. Bei der Verstellung des Scharkörpers zur Einstellung der Eindringtiefe des Aufreissmei-ßels und der Scharflügel in den Boden ändert sich der aufrechte Verlauf der Vorderseite des Aufreissmeißels zur Senkrechten wie auch der Anstellwinkel der Scharflügel zur Arbeitsrichtung des Säschares und zur Bodenoberfläche bzw. zum Säfurchengrund.

Um hier zumindest teilweise Abhilfe zu schaffen, ist bei dem Säschar der DE 10 2006 026 808 A1 vorgesehen, den jeweiligen Scharflügel um eine quer zur Arbeitsrichtung verlaufende Achse frei pendelnd am Scharkörper befestigen. Hierdurch kann sich der jeweilige Scharflügel entsprechend der Vorwärtsbewegung des Säschares frei ausrichten, so dass der Scharflügel den Boden optimiert durchschneidet und nicht durchwühlt.

Durch die US 5 605 196 A1 ist es bekannt, den jeweiligen Scharflügel verstellbar an dem Aufreissmeißel zu befestigen.

Die US 2 080 741 A offenbart ein Unkrautmesser, das eine Vielzahl von Einstellungen umfasst, so dass das Unkrautmesser so eingestellt werden kann, dass es parallel oder unter verschiedenen Winkeln zum Boden verläuft, abhängig von dem angestrebten Resultat.

Die DE 103 27 377 A1 offenbart eine Sämaschine mit Meißelsäscharen und zwei hinter den Meißelsäscharen und an diesen angeordneten sowie schräg zur Fahrtrichtung angestellten Schließ- und/oder Tiefenführungsrollen. Die DE 10 2006 026 808 A1 offenbart ein landwirtschaftliches in den Boden eingreifendes Scharwerkzeug. US 5,865,131 offenbart einen Düngemittelapplikator.

Der Erfindung liegt die Aufgabe zu Grunde, eine vereinfachte Befestigung der Scharflügel und gleichzeitig eine verbesserte Einstellung des Aufreissmeißels mit den Scharflügeln gegenüber dem Scharkörper bei Veränderung der Eindringtiefe des Säschares in dem Boden zu schaffen, damit eine optimierte Einstellung und Ausrichtung der Scharflügel zum Boden bei jeder Eindringtiefe des Säschares in dem Boden erhalten bleibt.

Diese Aufgabe wird erfindungsgemäß durch ein Säschar gemäß Anspruch 1 gelöst. Die Scharflügel sind an dem Aufreißmeißel angeordnet, und der Aufreißmeißel ist mit den Scharflügeln um eine quer zur Fahrtrichtung verlaufende horizontale Achse verstellbar und über eine zwischen dem Aufreißmeißel und dem Scharkörper angeordnete Einstellvorrichtung in verschiedenen Positionen festsetzbar.

Infolge dieser Maßnahme lässt sich der Aufreissmeißel gemeinsam mit den daran angeordneten Scharflügeln zur Kompensation der Veränderung der Neigung des Scharkörpers bei Veränderung der Eindringtiefe des Säschares in dem Boden einfach in die optimierte Position zur Bodenoberfläche bzw. zum Säfurchengrund einstellen.

Eine einfache Festlegung der Position des Aufreissmeißels mit den Scharflügeln gegenüber den Scharkörper zur Kompensation der Veränderung der Neigung des Scharkörpers wird dadurch erreicht, dass die Einstellvorrichtung zumindest ein um eine quer zur Fahrtrichtung verlaufende horizontale Achse verdrehbares, exzentrisch ausgebildetes und mit unterschiedlichen Abständen zur Drehachse angeordnete Einstellflächen aufweisendes Einstellelement aufweist.

Eine sichere Festlegung des Einstellelementes gegenüber dem Scharkörper , so dass es zu keiner selbstständigen Verstellung des Einstellelementes bei dem rauen landwirtschaftlichen Säbetrieb kommen kann, wird dadurch erreicht, dass zwischen dem zumindest einem Einstellelement und dem Scharkörper zumindest ein formschlüssig ineinandergreifender Vorsprung und eine komplementäre Vertiefung angeordnet sind.

Um eine gleichmäßige Verteilung des dem Säschar zugeleiteten Materiales zur Ablage in der Säfurche zu gewährleisten, ist vorgesehen, dass dem Scharkörper zumindest eine im unteren Bereich des Scharkörpers in zumindest einer Leitungsmündung ausmündende Materialzuleitung zugeordnet ist, dass unterhalb der Scharflügel und der zumindest einen Leitungsmündung eine dachförmig ausgebildete Prallplatte angeordnet ist.

Eine einfache Ausgestaltung zur Erreichung der gleichmäßigen Verteilung des auf die Prallfläche auftreffenden Materiales lässt sich dadurch erreichen, dass die dachförmig ausgebildete Prallplatte eine mittlere nach hinten abfallende vorzugsweise ebene Mittelprallfläche und jeweils von den Seitenbereichen dieser Mittelprallfläche seitlich abfallende Seitenprallflächen aufweist.

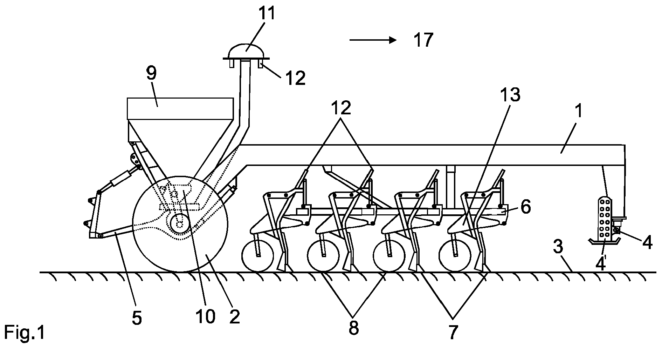

Weitere Einzelheiten sind der Bespielsbeschreibung und den Zeichnungen zu entnehmen. Hierbei zeigen
- Fig.1: eine Sämaschine mit den erfindungsgemäßen Säscharen in vereinfachter Prinzipdarstellung und Seitenansicht,

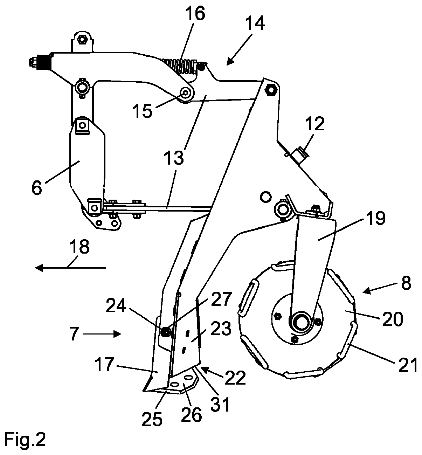

- Fig.2: ein erfindungsgemäßes Säschar mit einer ersten Einstellung des Aufreissmeissels in Prinzipdarstellung in Seitenansicht,

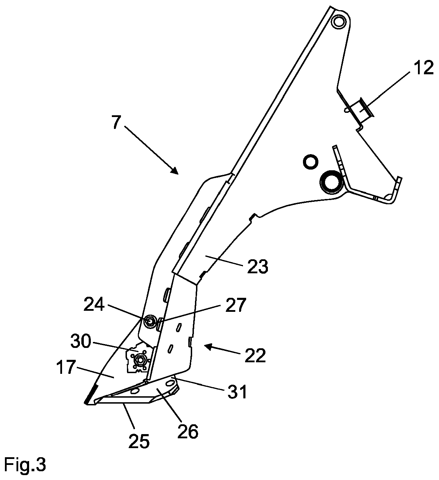

- Fig.3: das Säschar in einer anderen Tiefeneinstellung mit der ersten Einstellung des Aufreissmeissels gemäß Fig.2 in Prinzipdarstellung in Seitenansicht,

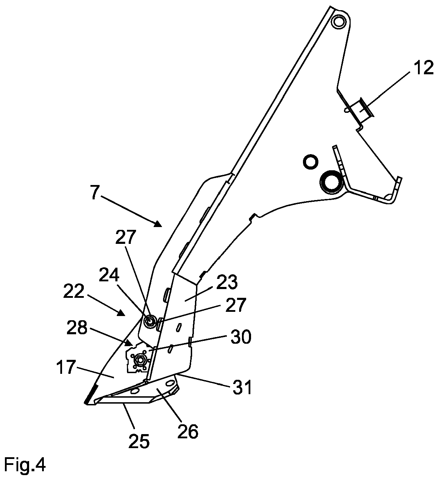

- Fig.4: das Säschar in einer anderen Einstellung des Aufreissmeissels und veränderter Anstellung des Säschare in Prinzipdarstellung in Seitenansicht,

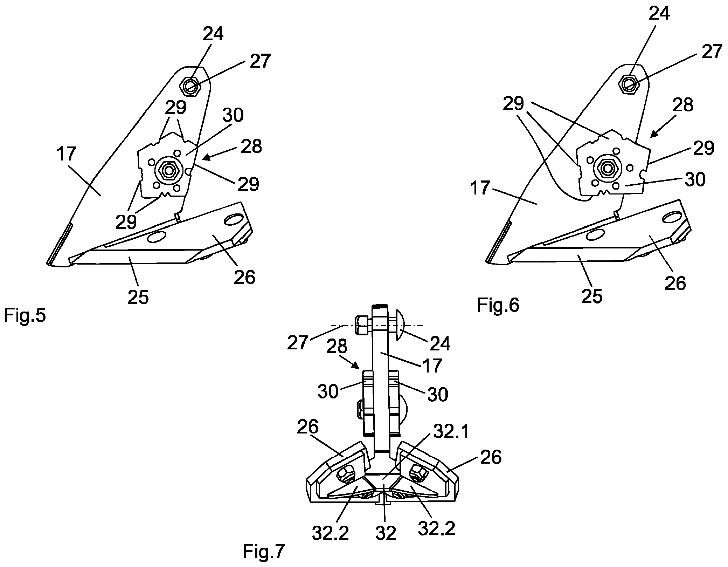

- Fig.5: der Aufreissmeißel mit der Einstellung des Einstellelementes nach Fig. 2 und 2 in vergrößertem Maßstab und in Seitenansicht,
- Fig.6: der Aufreissmeißel mit der Einstellung des Einstellelementes nach Fig.4 in vergrößertem Maßstab und in Seitenansicht und
- Fig.7: den Aufreissmeissel in der Ansicht von hinten.

Die Sämaschine zum Einsatz zur Direktsaat und zur Mulchsaat weist den langgestreckten Tragrahmen 1, der sich über Laufräder 2 auf dem Boden 3 abstützt, auf. Der Tragrahmen 1 weist auf seiner Vorderseite die Zug- und Kupplungseinrichtung 4 zum Ankuppeln an den Dreipunktkraftheber eines Ackerschleppers auf. An der Kupplungseinrichtung 4 können die höhenverstellbaren Abstellstützen 4' angeordnet sein. An der Rückseite des Tragrahmens 1 ist die mittels Hydraulikelemente hydraulisch anhebbare und absenkbare Kuppeleinrichtung 5 zum Ankuppeln von Arbeitswerkzeugen, z.B. Striegeln angeordnet. Vor den Laufrädern 2 sind an dem Tragrahmen 1 über die Trageinrichtung 6 die hier im Ausführungsbeispiel als Meißelsäschare 7 ausgebildeten Säschare mit den Rollen 8 angeordnet, die die Meißelsäschare 7 in ihrer Tiefe in den Boden führen. Der Vorratsbehälter 9 ist an dem Tragrahmen angeordnet. Über eine pneumatische Förder- und Dosiereinrichtung 10 wird das sich im Vorratsbehälter 9 befindliche Saatgut den Säscharen 8 über den Verteilerköpfen 11 und den Saatleitungen 12 zugeführt.

Die Meißelsäschare 7 sind über als Parallelogrammhalterungen 13 ausgebildete Halterungen an den Tragelementen 6 angeordnet. Die parallelogrammartige Halterung 13 weist eine zweigeteilte Oberstrebe 14, die über ein Gelenk 15 miteinander verbunden sind, auf. Mittels der Feder 16 werden diese Streben 14 in gestreckter Stellung gehalten. Im Ausführungsbeispiel weist das Meißelsäschar 7 einen auf Griff stehenden Aufreissmeißel 17 auf. Es ist jedoch auch möglich, dass das vordere untere Bereich des Aufreissmeißels 7 derart geneigt nach hinten unten verläuft, dass die Scharspitze gegenüber den übrigen vorderen Bereichen nacheilend ist. Die Fahrt- und Arbeitsrichtung ist durch den Pfeil 18 gekennzeichnet.

Der parallelogrammartigen Halterung 13 kann eine nicht dargestellte Belastungseinrichtung zugeordnet sein, um den Schardruck einzustellen und somit auch ein sicheres Eindringen des Aufreissmeißels 17 des Meißelsäschares 7 auch in hartem Boden zu gewährleisten. Weiterhin kann hierdurch die auf die Tiefenführungsrollen 8 zum Andrücken des Bodens in der Säfurche wirkende Druckkraft variiert werden.

Jedem Meißelsäschar 7 sind zwei Tiefenführungsrollen 8 zugeordnet, die in bekannter Weise entgegengesetzt schräg und zu einem sich in Fahrtrichtung 18 öffnenden V angestellt sind, angeordnet. Die beiden Rollen 8 sind mittels einer Halterung 18 an dem Schar 7 befestigt.

Die Rollen 8 weisen eine scheibenförmige Halterungsscheibe 20 auf. An dem freien äußeren umlaufenden Randbereich der scheibenartigen und ebenen flachen Halterungsscheibe 20 sind in radialer Richtung abstehende Stütz- oder Druckstäbe 21 beabstandet zueinander angeordnet. Die Stütz- und Druckstäbe 21 sind U- oder ringförmig ausgestaltet.

In dem unteren Bereich 22 des Scharkörpers 23 des Meißelschares 7 ist in dessen unteren vorderen Bereich und an der Vorderseite des Scharkörpers 23 der mittels einer Befestigungsvorrichtung 24 befestigte Aufreißmeißel 17 in begrenzten Umfang verschwenkbar befestigt.

Beidseitig sind an dem Aufreißmeißel 17 seitlich abstehende und mit einer vorderen Schneidkante 25 versehene Scharflügel 26 zur Schaffung einer Säfurche im Boden angeordnet. Die Scharflügel 26 sind an dem Aufreißmeißel 17 angeordnet. Der Aufreißmeißel 17 ist mit den Scharflügeln 26 um eine quer zur Fahrtrichtung 18 verlaufende horizontale Achse 27 verstellbar gegenüber dem Scharkörper 23 angeordnet und über eine zwischen dem Aufreißmeißel 17 und dem Scharkörper 23 angeordnete Einstellvorrichtung 28 in verschiedenen Positionen festsetzbar ist. Durch diese Befestigung lässt sich der Aufreissmeißel 17 gemeinsam mit den daran angeordneten Scharflügeln 26 zur Kompensation der Veränderung der Neigung des Scharkörpers 17 bei Veränderung der Eindringtiefe des Säschares 7 in dem Boden einfach in die optimierte Position zur Bodenoberfläche bzw. zum Säfurchengrund gegenüber dem Scharkörper23 verstellen und somit in eine optimierte Position einstellen.

Die Einstellvorrichtung 28 weist zumindest ein um eine quer zur Fahrtrichtung 18 verlaufende horizontale Achse 27 verdrehbares, exzentrisch ausgebildetes und mit unterschiedlichen Abständen zur Drehachse 27 angeordnete Einstellflächen 29 aufweisendes Einstellelement 30 auf. Zwischen dem zumindest einem Einstellelement 30 und dem Scharkörper 23 sind zumindest ein nicht dargestelltes formschlüssig ineinandergreifender Vorsprung und eine komplementäre Vertiefung angeordnet. Hierdurch wird eine sichere Festlegung des Einstellelementes 3 gegenüber dem Scharkörper 23 gewährleistet, so dass es zu keiner selbstständigen Verstellung des Einstellelementes 3 bei dem rauen landwirtschaftlichen Säbetrieb kommt. Somit ist also eine einfache Festlegung der Position des Aufreissmeißels mit den Scharflügeln 26 gegenüber den Scharkörper 23 zur Kompensation der Veränderung der Neigung des Scharkörpers 23 vorhanden.

Dem Scharkörper 23 ist zumindest eine im unteren Bereich des Scharkörpers 23 in zumindest einer Leitungsmündung 31 ausmündende Materialzuleitung 12 zugeordnet. Über diese Materialzuleitung 12 wird dem Säschar 7 das auszubringende Material, wie Saatgut und/oder Dünger in einstellbaren Mengen zugeleitet. Unterhalb der Scharflügel 26 und der zumindest einen Leitungsmündung 31 ist eine dachförmig ausgebildete Prallplatte 32 angeordnet. Die dachförmig ausgebildete Prallplatte 32 weist eine mittlere nach hinten abfallende vorzugsweise ebene Mittelprallfläche 32.1 und jeweils von den Seitenbereichen dieser Mittelprallfläche 32.1 seitlich abfallende Seitenprallflächen 32.2 auf. Durch den Aufprall der aus der Leitungsmündung der Materialzuleitung 12 austretenden Saat- und/oder Düngerkörner ergibt sich eine gleichmäßige Verteilung des dem Säschar zugeleiteten Materiales zur Ablage in der Säfurche.

Der Schutzumfang der vorliegenden Erfindung wird durch die angefügten Ansprüche definiert.

## Patentansprüche

1. Säschar, insbesondere Meißelschar (7), vorzugsweise für das Direkt- und/oder Mulchsäverfahren mit einem Scharkörper (23), in dessen unteren vorderen Bereich und an der Vorderseite des Scharkörper (23) ein mittels einer Befestigungsvorrichtung (24) befestigter Aufreißmeißel (17) und seitlich von dem Aufreißmeißel (17) abstehende mit einer vorderen Schneidkante (25) versehene Scharflügel (26) zur Schaffung einer Säfurche im Boden angeordnet sind, wobei die Scharflügel (26) an dem Aufreißmeißel (17) angeordnet sind, dass der Aufreißmeißel (17) mit den Scharflügeln (26) um eine erste quer zur Fahrtrichtung (18) verlaufende horizontale Achse (27) verstellbar und über eine zwischen dem Aufreißmeißel (17) und dem Scharkörper (23) angeordnete Einstellvorrichtung (28) in verschiedenen Positionen festsetzbar ist,
**dadurch gekennzeichnet, dass** die Einstellvorrichtung (28) zumindest ein um eine zweite quer zur Fahrtrichtung (18) verlaufende horizontale Achse verdrehbares, exzentrisch ausgebildetes und mit unterschiedlichen Abständen zur zweiten horizontalen Achse angeordnete Einstellflächen (29) aufweisendes Einstellelement (30) aufweist.

2. Säschar nach Anspruch 1, **dadurch gekennzeichnet, dass** zwischen dem zumindest einem Einstellelement (30) und dem Scharkörper (23) zumindest ein formschlüssig ineinandergreifender Vorsprung und eine komplementäre Vertiefung angeordnet sind.

3. Säschar nach Anspruch 1 oder 2, **dadurch gekennzeichnet, dass** dem Scharkörper (23) zumindest eine im unteren Bereich des Scharkörpers (23) in zumindest einer Leitungsmündung (31) ausmündende Materialzuleitung (12) zugeordnet ist, dass unterhalb der Scharflügel (26) und der zumindest einen Leitungsmündung (31) eine dachförmig ausgebildete Prallplatte (32) angeordnet ist.

4. Säschar nach Anspruch 3, **dadurch gekennzeichnet, dass** die dachförmig ausgebildete Prallplatte (32) eine mittlere nach hinten abfallende vorzugsweise ebene Mittelprallfläche (32.1) und jeweils von den Seitenbereichen dieser Mittelprallfläche (32.1) seitlich abfallende Seitenprallflächen (32.2) aufweist.

## Claims

1. Sowing coulter, in particular a chisel coulter (7), preferably for the direct and/or mulch sowing method, having a coulter body (23), there being arranged in the lower front region and on the front side of the coulter body (23) a ripping chisel (17), which is fastened by means of a fastening device (24), and coulter blades (26), which protrude laterally from the ripping chisel (17) and are provided with a front cutting edge (25) for creating a sowing furrow in the ground, the coulter blades (26) being arranged on the ripping chisel (17), such that the ripping chisel (17), together with the coulter blades (26), can be adjusted about a first horizontal axis (27) extending transversely to the direction of travel (18) and can be fixed in different positions by means of an adjusting device (28) arranged between the ripping chisel (17) and the coulter body (23),
**characterized in that** the adjusting device (28) comprises at least one eccentric adjusting element (30) which can be rotated about a second horizontal axis extending transversely to the direction of travel (18) and has adjustment surfaces (29) arranged at different distances from the second horizontal axis.

2. Sowing coulter according to claim 1, **characterized in that** at least one positively interlocking projection and a complementary recess are arranged between the at least one adjusting element (30) and the coulter body (23).

3. Sowing coulter according to claim 1 or 2, **characterized in that** at least one material supply line (12) which opens out in the lower region of the coulter body (23) in at least one line opening (31) is associated with the coulter body (23), **in that** a roof-shaped deflection plate (32) is arranged below the coulter blades (26) and the at least one line opening (31).

4. Sowing coulter according to claim 3, **characterized in that** the roof-shaped deflection plate (32) comprises a central, rearwardly sloping, preferably planar central deflection surface (32.1), and lateral deflection surfaces (32.2) in each case laterally sloping from the side regions of said central deflection surface (32.1).

## Revendications

1. Soc de semoir, en particulier soc à tranchant (7), de préférence pour le procédé de semis direct et/ou sous paillis, comportant un corps de soc (23) où sont disposés, dans sa zone inférieure avant et sur le côté avant du corps de soc (23), une lame de scarification (17) fixée au moyen d'un dispositif de fixation (24) et des ailettes de soc (26) pourvues d'une arête de coupe avant (25) et dépassant latéralement de la lame de scarification (17), pour la création d'un sillon de semis dans le sol, dans lequel les ailettes de soc (26) sont disposées sur la lame de scarification (17), en ce que la lame de scarification (17) avec les ailettes de soc (26) peut être réglée autour d'un premier axe horizontal (27) s'étendant transversalement au sens de la marche (18) et peut être installée dans différentes positions par l'intermédiaire d'un dispositif de réglage (28) disposé entre la lame de scarification (17) et le corps de soc (23),
**caractérisé en ce que** le dispositif de réglage (28) présente au moins un élément de réglage (30) pouvant tourner autour d'un second axe horizontal s'étendant transversalement au sens de la marche (18), lequel élément de réglage est réalisé de manière excentrée et présente des surfaces de réglage (29) disposées à des distances différentes du second axe horizontal.

2. Soc de semoir selon la revendication 1, **caractérisé en ce qu'**entre l'au moins un élément de réglage (30) et le corps de soc (23) sont disposés au moins une saillie et un renfoncement complémentaire venant en prise l'un dans l'autre par complémentarité de forme.

3. Soc de semoir selon la revendication 1 ou 2, **caractérisé en ce qu'**au moins une conduite d'alimentation en matériau (12), débouchant dans au moins une embouchure de conduite (31) dans la zone inférieure du corps de soc (23), est associée au corps de soc (23), **en ce qu'**une plaque de déviation (32) réalisée en forme de toit est disposée sous les ailettes de soc (26) et l'au moins une embouchure de conduite (31).

4. Soc de semoir selon la revendication 3, **caractérisé en ce que** la plaque de déviation (32) réalisée en forme de toit présente une surface de déviation centrale (32.1) centrale inclinée vers l'arrière, de préférence plane, et respectivement des surfaces de déviation latérales (32.2) inclinées latéralement à partir des zones latérales de ladite surface de déviation centrale (32.1).
